# EUROPÄISCHE PATENTSCHRIFT

(11) **EP 2 877 370 B1**
(45) Veröffentlichungstag und Bekanntmachung des Hinweises auf die Patenterteilung: **01.02.2017**
(21) Anmeldenummer: 13734373.7
(22) Anmeldetag: 29.06.2013
(51) Int. Cl.: B60Q 1/068

(54) **VERFAHREN ZUM HERSTELLEN EINER SCHRAUBENVERBINDUNG IN EINEM SCHEINWERFER**
METHOD FOR PRODUCING A SCREW CONNECTION IN A HEADLIGHT
PROCEDE DE REALISATION D'UNE LIAISON FILETÉE DANS UN PHARE

(30) Priorität: 24.07.2012 DE 102012106689
(43) Veröffentlichungstag der Anmeldung: 03.06.2015
(73) Patentinhaber: Hella KGaA Hueck & Co., 59552 Lippstadt (DE)
(72) Erfinder: HUNOLT, Martin, 59555 Lippstadt (DE)
(86) Internationale Anmeldenummer: PCT/EP2013/063759
(87) Internationale Veröffentlichungsnummer: WO 2014/016080

(56) Entgegenhaltungen:
- FR-A1- 2 639 588
- US-A- 4 967 318
- US-A- 5 673 992

## Beschreibung

Die vorliegende Erfindung richtet sich auf ein Verfahren zum Herstellen einer Schraubenverbindung in einem Scheinwerfer eines Fahrzeugs mit einem Schraubelement, das mit einem Schraubenschaft in eine Einschrauböffnung eines Scheinwerferbauteils eingeschraubt wird.

### STAND DER TECHNIK

Aus der DE 38 41 632 C2 ist eine Schraubenverbindung in einem Scheinwerfer eines Fahrzeugs bekannt und es ist ein Schraubelement mit einem Schraubenschaft gezeigt, der in einer Einschrauböffnung des Scheinwerferbauteils eingeschraubt ist, und das Scheinwerferbauteil ist durch einen Rahmen gebildet, der am Fahrzeug befestigt ist. Wird der Schraubenschaft in die Einschrauböffnung eingeschraubt, können Schraubspäne aus dem Material des Scheinwerferbauteils entstehen, insbesondere dann, wenn das Schraubelement ein selbstschneidendes Gewinde aufweist. Die gebildeten Schraubspäne können in den Scheinwerfer gelangen und so die Funktion des Scheinwerfers stören oder die Schraubspäne können nach Einbau des Scheinwerfers von der Außenseite des Scheinwerfers sichtbar sein.

Aus der DE 10 2007 028 988 A1 ist ein weiterer Scheinwerfer mit einer Schraubenverbindung bekannt, und das Schraubelement weist einen Schraubelementkopf auf, der einen Kugelkopf für eine bewegliche Verbindung eines Lichtmoduls bildet. Wird das Schraubelement in den gezeigten Rahmen eingeschraubt, der das Scheinwerferbauteil mit der Einschrauböffnung bildet, so können sich, wenn das Gewinde des Schraubenschaftes als selbstschneidendes Gewinde ausgebildet ist, Schraubspäne bilden, die nachteilhafterweise in den Scheinwerfer gelangen können.

Die US 5,673,992 A offenbart ein Einstellungssystem für einen Scheinwerfer. Ein Reflektor ist mit einer Einstellschraube verbunden, die durch eine Gehäusewand hindurchgeführt ist. Ein Dichtelement dichtet den Schraubenschaft gegenüber dem Gehäuse ab, damit durch den Einstellungsmechanismus keine Verunreinigungen in das Gehäuse gelangen können.

Die US 4,967,318 A offenbart eine Befestigung für einen Scheinwerferreflektor. Eine Schraube mit einem Kugelkopf zum Halten des Reflektors in einer gewünschten Position ist im Scheinwerfergehäuse aufgenommen. Eine Dichtmanschette verhindert den Eintritt von Feuchtigkeit an der Schraube in das Gehäuse hinein.

### OFFENBARUNG DER ERFINDUNG

Aufgabe der vorliegenden Erfindung ist es, eine Schraubenverbindung in einem Scheinwerfer eines Fahrzeugs so weiterzubilden, dass das Eindringen von bei der Schraubenverbindung entstehenden Schraubspänen in den Scheinwerfer vermieden wird.

Diese Aufgabe wird von einem Verfahren zum Herstellen einer Schraubenverbindung in einem Scheinwerfer gemäß Anspruch 1 gelöst. Vorteilhafte Weiterbildungen der Erfindung sind in den abhängigen Ansprüchen angegeben.

Die Erfindung schließt die technische Lehre ein, dass eine Schutzmanschette vorgesehen und derart über wenigstens einem Teil des Schraubenschaftes angeordnet ist, dass die Schutzmanschette die Einschrauböffnung abdeckt, und dass die Schutzmanschette den Vorsprung vor dem Einschrauben des Schraubelements in die Einschrauböffnung umschließt, so dass vermieden wird, dass beim Einschrauben enstehende Schraubspäne in ein Gehäuse des Scheinwerfers hineingelangen können.

Der besondere Vorteil hieran ist die abdeckende oder abdichtende Wirkung der Schutzmanschette über der Einschrauböffnung, und Schraubspäne, die beim Einschrauben des Schraubenschaftes in die Einschrauböffnung entstehen, werden von der Schutzmanschette zurückgehalten und gelangen so nicht unkontrolliert in den Scheinwerfer. Der Schraubenschaft ist mit einem selbstschneidenden Gewinde ausgebildet, und wird der Schraubenschaft in die Einschrauböffnung eingeschraubt, so können Schraubspäne entstehen, die entgegen der Einschraubrichtung aus der Einschrauböffnung heraus gelangen können. Die Schutzmanschette wird folglich derart über einem Teil des Schraubenschaftes angeordnet, dass mit der Schutzmanschette die Seite der Einschrauböffnung im Scheinwerferbauteil abgedeckt wird, aus der die Schraubspäne heraus gelangen können. Dabei beschreibt der Schraubenschaft allgemein den Schaft des Schraubelementes, der nicht grundsätzlich über seiner gesamten Länge ein Gewinde aufweisen muss. Beispielsweise kann die Schutzmanschette auf einem Abschnitt des Schraubenschaftes aufsitzen, der kein Gewinde aufweist.

Die Einschrauböffnung ist endseitig in einem Vorsprung im Scheinwerferbauteil ausgebildet, wobei die Schutzmanschette den Vorsprung außenseitig umschließt. Beispielsweise kann der Vorsprung einen Schraubendom bilden, und im Schraubendom befindet sich ein Loch, das die Einschrauböffnung bildet und in das der Schraubenschaft des Schraubelementes eingeschraubt wird. Ist vor dem Einschrauben des Schraubelementes die Schutzmanschette auf dem Schraubenschaft angeordnet, kann die Schutzmanschette den Vorsprung vollumfänglich umschließen, sodass verhindert wird, dass sich bildende Schraubspäne in den Scheinwerfer gelangen können.

Dabei weist die Schutzmanschette einen Schaftabschnitt und einen tüllenartig ausgebildeten Manschettenabschnitt auf, wobei der Schaftabschnitt auf dem Schraubenschaft angeordnet wird und wobei der Manschettenabschnitt den Vorsprung umschließt. Die Schutzmanschette kann rotationssymmetrisch um eine Mittelachse ausgebildet sein, die mit der Mittelachse des Schraubelementes zusammenfällt, wenn die Schutzmanschette auf dem Schraubenschaft aufgebracht ist. Der Innendurchmesser des Manschettenabschnittes kann etwa dem Außendurchmesser des Vorsprungs entsprechen, wobei es von besonderem Vorteil ist, wenn der Manschettenabschnitt einen geringfügig kleineren Durchmesser aufweist als der Vorsprung, um eine Dichtwirkung zwischen dem Manschettenabschnitt und dem Vorsprung zu erzielen. Wird das Schraubelement in das Scheinwerferbauteil eingeschraubt, so wird der Manschettenabschnitt unter leichter Aufweitung über den Vorsprung geschoben, während der Schaftabschnitt auf dem Schraubenschaft verbleibt.

Auch im eingeschraubten Zustand kann ein Teil des Schraubenschaftes noch aus der Einschrauböffnung herausragen, auf dem der Schaftabschnitt der Schutzmanschette aufgebracht ist. Beispielsweise kann das Schraubelement einen Schraubelementkopf aufweisen, und die Schutzmanschette wird zwischen dem Scheinwerferbauteil und dem Schraubelementkopf gehalten. Damit ist die Schutzmanschette verliersicher auf dem Schraubelement angeordnet und kann dauerhaft im Scheinwerfer des Fahrzeugs als Bestandteil der Schraubenverbindung verbleiben.

Beispielsweise kann das Schraubelement ein Kugelkopfelement mit einem kugelförmigen Schraubelementkopf zur Aufnahme eines Elementes im Scheinwerfer bilden, wobei das Scheinwerferbauteil beispielsweise ein Gehäuse des Scheinwerfers bildet. Alternativ kann das Scheinwerferbauteil auch einen Tragrahmen bilden, an dem mit dem Schraubelement ein Lichtmodul angebracht wird.

Die Schutzmanschette kann aus einem elastischen Material ausgebildet sein, insbesondere aus einem Gummimaterial oder aus einem Weichkunststoffmaterial. Beispielsweise kann die Schutzmanschette aus einem Elastomer gebildet sein. Insbesondere kann die Schutzmanschette eine Länge aufweisen, die so bestimmt ist, dass diese die Einschrauböffnung bereits beim Einschrauben des Schraubenschaftes in die Einschrauböffnung abdeckt. Die Schutzmanschette kann dabei selbsthaltend am Schraubelement oder am Scheinwerferbauteil angeordnet werden. Eine vorteilhafte Ausführungsform kann vorsehen, dass die Schutzmanschette auf den Schraubenschaft aufgestülpt oder an den Schraubenschaft im Spritzgussverfahren angespritzt wird, sodass bei der Montage der Schraubenverbindung kein weiteres Einzelteil mitmontiert werden muss. Jedoch kann alternativ auch vorgesehen sein, die Schutzmanschette zuvor auf dem Vorsprung des Scheinwerferbauteils aufzustecken, bevor der Schraubenschaft beim Einschrauben des Schraubelementes in die Einschrauböffnung durch den Schaftabschnitt der Schutzmanschette und schließlich in die Einschrauböffnung eingeschraubt wird.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Fig. 1: eine perspektivische Ansicht einer gemäß der vorliegenden Erfindung hergestellten Schraubenverbindung mit einer Schutzmanschette und
- Fig. 2: eine Querschnittsansicht durch die Schraubenverbindung nach Figur 1 mit einer Schutzmanschette.

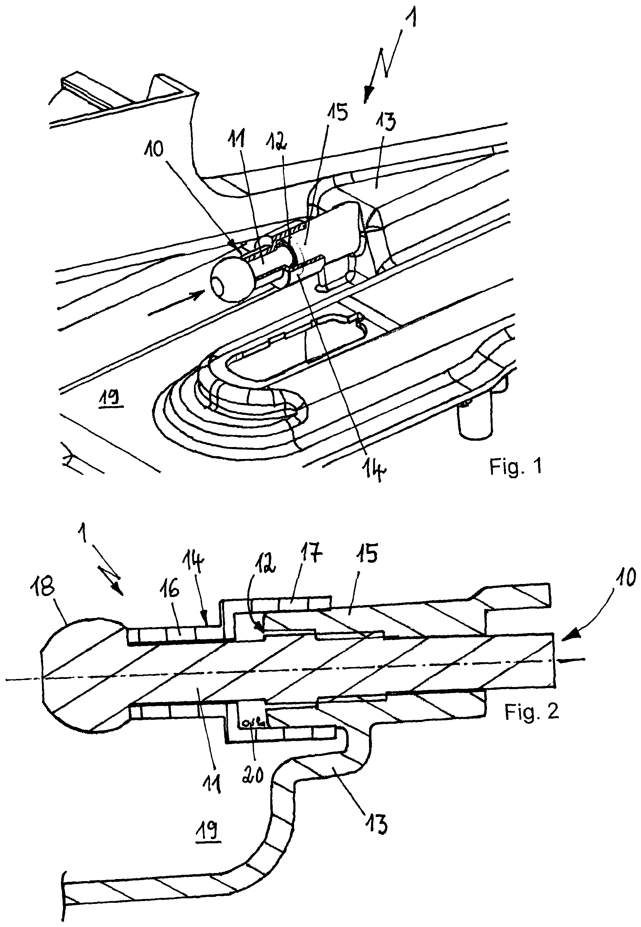

Figur 1 zeigt eine Schraubenverbindung 1 in einem Scheinwerfer eines Fahrzeugs mit einem Schraubelement 10, das mit einem Schraubenschaft in eine Einschrauböffnung 12 eines Scheinwerferbauteils 13 eingeschraubt ist. Das Scheinwerferbauteil 13 ist beispielhaft als Gehäuse 13 des Scheinwerfers ausgebildet. Am Gehäuse 13 ist ein Vorsprung 15 angeformt, der sich in die Gehäuseinnenseite 19 hinein erstreckt. Die Einschrauböffnung 12 ist endseitig am Vorsprung 15 vorhanden. Wird das Schraubelement 10 mit dem Schraubenschaft 11 in die Einschrauböffnung 12 eingeschraubt, so erstreckt sich das Schraubelement 10 entlang der Erstreckungsrichtung des Vorsprungs 15, und auch in eingeschraubtem Zustand des Schraubelementes 10 ragt noch ein Teil des Schraubenschaftes 11 aus dem Scheinwerferbauteils 13 heraus.

Das Schraubelement 10 weist einen Schraubelementkopf 18 auf, der als Kugelkopf ausgebildet ist, und an dem Schraubelementkopf 18 kann ein weiteres Bauteil des Scheinwerfers beweglich aufgenommen werden. Beispielsweise kann auf dem Schraubelementkopf 18 ein Zusatzfernlichtreflektor, ein Tragrahmen für ein Lichtmodul oder beispielsweise ein statisches Kurvenlicht befestigt werden.

Die Einschraubrichtung zum Einschrauben des Schraubelementes 10 in die Einschrauböffnung 12 ist mit einem Pfeil dargestellt und erfolgt somit aus der Richtung der Gehäuseinnenseite 19. Der Schraubenschaft 11 weist ein selbstschneidendes Gewinde auf, und beim Einschrauben des Schraubelementes 10 in die Einschrauböffnung 12 des Vorsprungs 15 können sich Schraubspäne bilden, die in das Gehäuse 13 des Scheinwerfers gelangen können. Die Schraubspäne 20 entstehen durch das Einschrauben des Schraubelementes 10 in die Einschrauböffnung 12, insbesondere wenn der Schraubenschaft 11 des Schraubelementes 10 ein selbstschneidendes Gewinde aufweist. Die Schraubspäne 20 bestehen dabei aus dem Material des Scheinwerferbauteils 13, das beispielsweise das Gehäuse 13 des Scheinwerfers bildet. Um das unkontrollierte Freisetzen der Schraubspäne 20 zu verhindern, ist auf dem Schraubenschaft 11 des Schraubelementes 10 erfindungsgemäß eine Schutzmanschette 14 aufgebracht. Die Schutzmanschette 14 deckt dabei die Einschrauböffnung 12 derart ab, dass ein unkontrolliertes Eindringen von Schraubspänen in die Gehäuseinnenseite 19 unterbunden ist. In der Darstellung ist die Schutzmanschette 14 geschnitten dargestellt. In Figur 2 ist in einer Querschnittsansicht der Schraubenverbindung 1 die Anordnung der Schutzmanschette 14 näher dargestellt.

Figur 2 zeigt in einer quergeschnittenen Ansicht eine Schraubenverbindung 1 mit den Merkmalen der vorliegenden Erfindung. Die Schraubenverbindung 1 umfasst ein Schraubelement 10, das in einem Scheinwerferbauteil 13 eingeschraubt ist, und das Scheinwerferbauteil 13 ist beispielhaft als Gehäuse 13 eines Scheinwerfers ausgebildet. Das Schraubelement 10 umfasst einen Schraubelementkopf 18, der kugelförmig ausgeführt ist und einen Bestandteil eines Kugelgelenkes bildet, um am Schraubelement 10 ein Bauteil im Gehäuse 13 des Scheinwerfers anzuordnen, welches beispielsweise einen Zusatzfernlichtreflektor, einen Tragrahmen für ein Lichtmodul oder ein statisches Kurvenlicht oder dergleichen bildet. Gemäß einem weiteren Beispiel kann am Schraubelementkopf 18 auch eine Leuchtweitenverstelleinrichtung angebracht werden. Das Schraubelement 10 ist von der Gehäuseinnenseite 19 in eine Einschrauböffnung 12 eingeschraubt, und die Einschrauböffnung 12 bildet die Öffnung einer Bohrung, in die ein Schraubenschaft 11 des Schraubelementes 10 eingeschraubt wird. Der Schraubenschaft 11 besitzt einen Gewindeabschnitt, der beim Einschrauben in die Bohrung ein Gegengewinde schneidet. Dabei entstehen Schraubspäne 20, die aus der Einschrauböffnung 12 herausbefördert werden.

Um zu verhindern, dass die Schraubspäne 20 in die Gehäuseinnenseite 19 des Gehäuses 13 gelangen, ist erfindungsgemäß eine Schutzmanschette 14 vorgesehen, die die Einschrauböffnung 12 abdeckt. Die Schutzmanschette 14 weist einen Schaftabschnitt 16 und einen Manschettenabschnitt 17 auf, und mit dem Schaftabschnitt 16 ist die Schutzmanschette 14 auf einem Abschnitt des Schraubenschaftes 11 angeordnet, der sich zwischen dem Schraubelementkopf 18 und der Einschrauböffnung 12 erstreckt. Der Manschettenabschnitt 17 weist dabei in Richtung zur Einschrauböffnung 12 und deckt diese ab. Folglich können Schraubspäne 20, die beim Einschrauben des Schraubenschaftes 11 in die Einschrauböffnung 12 entstehen, innenseitig in der Schutzmanschette 14 gesammelt werden, wodurch verhindert wird, dass die Schraubspäne 20 in das Gehäuse 13 des Scheinwerfers gelangen.

Die Bohrung im Scheinwerferbauteil 13 mit der endseitigen Einschrauböffnung 12 ist in einem Vorsprung 15 ausgebildet, und der Vorsprung 15 ragt in die Gehäuseinnenseite 19 hinein. Die Schutzmanschette 14 ist dabei derart zwischen dem Schraubelementkopf 18 und der Einschrauböffnung 12 angeordnet, dass der Manschettenabschnitt 17 die Außenseite des Vorsprungs 15 umschließt und damit abdichtet. Weiterhin umschließt der Schaftabschnitt 16 der Schutzmanschette 14 den Schraubenschaft 11 derart dichtend, dass die Schraubspäne 20 aus dem gezeigten Bereich innenseitig des Manschettenabschnittes 17 bei eingeschraubtem Schraubelement 10 in die Einschrauböffnung 12 nicht mehr herausgelangen können. Somit wird beim Einschrauben des Schraubelementes 10 in das Scheinwerferbauteil 13 vermieden, dass die Schraubspäne 20 in das Gehäuse des Scheinwerfers hineingelangen können. Die Schutzmanschette 14 verbleibt auch nach Herstellung der Schraubenverbindung 1 in gezeigter Position, und auch nach Inbetriebnahme des Scheinwerfers werden die Schraubspäne 20 durch die Schutzmanschette 14 dauerhaft zurückgehalten und davor bewahrt, in die Gehäuseinnenseite 19 zu gelangen.

Die vorliegende Erfindung beschränkt sich in ihrer Ausführung nicht auf das vorstehend angegebene bevorzugte Ausführungsbeispiel. Vielmehr ist eine Anzahl von Varianten aus den Ansprüchen denkbar, welche von der dargestellten Lösung auch bei grundsätzlich andersgearteten Ausführungen Gebrauch macht. Nicht gezeigt ist eine mögliche Befestigung der Schutzmanschette 14 vor dem Fügen des Schraubelementes 10 am Scheinwerferbauteil 13. Die Schutzmanschette 14 kann beispielsweise vor dem Einschrauben des Schraubelementes 10 in die Einschrauböffnung 12 auf dem Schraubenschaft 11 aufgebracht werden, sodass das Schraubelement 10 mit der Schutzmanschette 14 einen einzeln handhabbaren Bauteilverbund bildet. Selbstverständlich kann das Material der Schutzmanschette 14 auch auf den Schraubenschaft 11 aufvulkanisiert oder an diesen angespritzt werden. Alternativ kann vorgesehen sein, die Schutzmanschette 14 mit dem Manschettenabschnitt 17 vor dem Fügen des Schraubelementes 10 an das Scheinwerferbauteil 13 anzubringen, beispielsweise auf den Vorsprung 15 aufzustecken, um anschließend das Schraubelement 10 einzuschrauben.

### Bezugszeichenliste

- 1: Schraubenverbindung
- 10: Schraubelement
- 11: Schraubenschaft
- 12: Einschrauböffnung
- 13: Scheinwerferbauteil, Gehäuse
- 14: Schutzmanschette
- 15: Vorsprung
- 16: Schaftabschnitt
- 17: Manschettenabschnitt
- 18: Schraubelementkopf, Kugelkopf
- 19: Gehäuseinnenseite
- 20: Schraubspäne

## Patentansprüche

1. Verfahren zum Herstellen einer Schraubenverbindung (1) in einem Scheinwerfer eines Fahrzeugs mit einem Schraubelement (10), das mit enem Schraubenschaft (11) in eine Einschrauböffnung (12) eines Scheinwerferbauteils (13) eingeschraubt wird, wobei der Schraubenschaft (11) ein selbstschneidendes Gewinde aufweist, wobei die Einschrauböffnung (12) endseitig in einem Vorsprung (15) im Scheinwerferbauteil (13) ausgebildet ist, mit folgenden Schritten:
- Bereitstellen
einer Schutzmanschette (14), die einen Schaftabschnitt (16) und einen tüllenartig ausgebildeten Manschettenabschnitt (17) aufweist,
- Anordnen der Schutzmanschette (14) über wenigstens einem Teil des Schraubenschaftes (11) derart, dass die Schutzmanschette die Einschrauböffnung abdeckt, und dass der Manschettenabschnitt (17) den Vorsprung (15) und der Schaftabschnitt (16)
den Schraubenschaft (11) derart dichtend umschließt, dass vermieden wird, dass beim Einschrauben des Schraubelementes (10) in die Einschrauböffnung (12) entstehende
Schraubspäne (20) in ein Gehäuse des Scheinwerfers hineingelangen können;
- Einschrauben des Schraubelementes (10) in die Einschrauböffnung (12).

2. Verfahren nach einem der vorgenannten Ansprüche, **dadurch gekennzeichnet, dass** das Schraubelement (10) einen Schraubelementkopf (18) aufweist, wobei die Schutzmanschette (14) zwischen dem Scheinwerferbauteil (13) und dem Schraubelementkopf (18) gehalten ist.

3. Verfahren nach einem der vorgenannten Ansprüche,
**dadurch gekennzeichnet, dass** das Schraubelement (10) ein Kugelkopfelement mit einem kugelförmigen Schraubelementkopf (18) zur Aufnahme eines Elementes im Scheinwerfer bildet, wobei das Scheinwerferbauteil (13) ein Gehäuse (13) des Scheinwerfers ist.

4. Verfahren nach einem der vorgenannten Ansprüche, **dadurch gekennzeichnet, dass** die Schutzmanschette (14) aus einem elastischen Material ausgebildet ist, insbesondere aus einem Gummimaterial oder aus einem Weichkunststoffmaterial.

5. Verfahren nach einem der vorgenannten Ansprüche, **dadurch gekennzeichnet, dass** die Schutzmanschette (14) eine Länge aufweist, die so bestimmt ist, dass diese die Einschrauböffnung (12) bereits beim Einschrauben des Schraubenschaftes (11) in die Einschrauböffnung (12) abdeckt.

6. Verfahren nach einem der vorgenannten Ansprüche, **dadurch gekennzeichnet, dass** die Schutzmanschette (14) selbsthaltend am Schraubelement (10) oder am Scheinwerferbauteil (13) angeordnet ist.

## Claims

1. Method of fabricating a threaded connection (1) in a vehicle headlamp using a screw element (10), which is screwed into a screw-in opening (12) of a headlamp component (13) using a screw shank (11), where the screw shank (11) has a self-cutting thread, where the screw-in opening (12) is embodied on the end side in a protrusion (15) in the headlamp component (13)
with the following steps:
- Supplying
a protective sleeve (14), which has a shank section (16) and a grommettype sleeve section (17),
- Arranging the protective sleeve (14) over at least part of the screw shank (11) such that the protective sleeve covers the screw-in opening, and the sleeve section (17) surrounds and seals the protrusion (15) and the shank section (16) surrounds and seals the screw shank (11) in such a way as to prevent the possibility of any screw swarf (20) created by screwing in the screw element (10) into the screw opening (12) finding its way into a housing of the headlamp;
- Screwing the screw element (10) into the screw-in opening (12).

2. Method in accordance with one of the above claims, wherein the screw element (10) has a screw element head (18), where the protective sleeve (14) is held between the headlamp component (13) and the screw element head (18).

3. Method in accordance with one of the above claims, wherein the screw element (10) has a ball head element with a ball-shaped screw element head (18) for holding an element in the
headlamp, where the headlamp component (13) is a housing (13) of the headlamp.

4. Method in accordance with one of the above claims, wherein the protective sleeve (14) is made of an elastic material, specifically of a rubber or soft plastic material.

5. Method in accordance with one of the above claims, wherein the protective sleeve (14) has a length defined such that this covers the screw-in opening (12) as early as when the screw shank (11) is screwed into the screw-in opening (12).

6. Method in accordance with one of the above claims, wherein the protective sleeve (14) is arranged on the screw element (10) or the headlamp component (13) in self-locking form.

## Revendications

1. Procédé pour réaliser un assemblage vissé (1) dans un projecteur d'un véhicule, comprenant un élément fileté (10) qui sera vissé par une tige de vis (11) dans une ouverture de vissage (12) d'un composant de projecteur (13), la tige de vis (11) présentant un filetage autotaraudeur, l'ouverture de vissage (12) se terminant vers l'extrémité dans une saillie (15) dans le composant de projecteur (13), avec les étapes suivantes :
- mettre à disposition un manchon de protection (14) qui présente une section de tige (16) et une section de manchon (17) réalisée de type embout,
- disposer le manchon de protection (14) sur au moins une partie de la tige de vis (11) de telle manière que le manchon de protection couvre l'ouverture de vissage et que la section de manchon (17) enferme de manière étanche la saillie (15) et la section de tige (16) la tige de vis (11) de telle manière qu'on évite que des coupeaux de vissage (20) qui se forment lors du vissage de l'élément fileté (10) dans l'ouverture de vissage (12) pénètrent un boîtier du projecteur,
- visser l'élément fileté (10) dans l'ouverture de vissage (12).

2. Procédé selon l'une des revendications précédentes, **caractérisé en ce que** l'élément fileté (10) présente une tête d'élément fileté (18), le manchon de protection (14) étant tenu entre le composant de projecteur (13) et la tête d'élément fileté (18).

3. Procédé selon l'une des revendications précédentes, **caractérisé en ce que** l'élément fileté (10) forme un élément à tête sphérique avec une tête sphérique d'élément fileté (18) pour le logement d'un élément dans le projecteur, le composant de projecteur (13) étant un boîtier (13) du projecteur.

4. Procédé selon l'une des revendications précédentes, **caractérisé en ce que** le manchon de protection (14) est réalisé d'un matériau élastique, surtout d'un matériau de caoutchouc ou d'une matière plastique souple.

5. Procédé selon l'une des revendications précédentes, **caractérisé en ce que** le manchon de protection (14) présente une longueur qui est calculée de telle manière que celui-ci couvre l'ouverture de vissage (12) déjà lors du vissage de la tige de vis (11) dans l'ouverture de vissage (12).

6. Procédé selon l'une des revendications précédentes, **caractérisé en ce que** le manchon de protection (14) est disposé à auto-maintien sur l'élément fileté (10) ou sur le composant de projecteur (13).
